(19) **Europäisches Patentamt / European Patent Office / Office européen des brevets**

(11) **EP 1 688 237 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
*B29C 69/00* (2006.01)   *B29C 47/14* (2006.01)
*B29C 65/48* (2006.01)   *B29C 63/02* (2006.01)

(21) Anmeldenummer: **06002222.5**

(22) Anmeldetag: **03.02.2006**

(54) **Verfahren zur Herstellung von Kunststoffschaumplatten aus Polystyrol-Extrusionsschaummaterial und abgedeckte Blockplatte**

Method for manufacturing plastic foam panels from extruded polystyrene foam material and covered panel

Procédé de fabrication de panneaux en mousse à partir de mousse de polystyrène extrudée et panneau recouvert

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.02.2005 DE 102005005877**
**06.05.2005 DE 102005020966**

(43) Veröffentlichungstag der Anmeldung:
**09.08.2006 Patentblatt 2006/32**

(73) Patentinhaber: **Wedi, Stephan**
**48282 Emsdetten (DE)**

(72) Erfinder: **Wedi, Stephan**
**48282 Emsdetten (DE)**

(74) Vertreter: **Hoffmeister, Helmut et al**
**Dr. Hoffmeister & Bischof**
**Postfach 3803**
**48021 Münster (DE)**

(56) Entgegenhaltungen:
**EP-A1- 1 273 429**   **DE-A1- 19 948 121**
**DE-A1-102005 029 844**   **US-A- 3 070 475**
**US-A- 5 095 042**

## Beschreibung

Die Erfindung betrifft ein Verfahren zur Herstellung von Kunststoffschaumplatten aus Polystyrol-Extrusionsschaummaterial.

Ein Verfahren, bei dem ein Halbzeug in Form einer Bauplatte oder eines Bauprofils aus mehreren Platten aus Kunststoff-Hartschaum zusammengefügt wird, ist beispielsweise aus der EP 0 466 163 bekannt. Bei dem bekannten Verfahren werden die einzelnen Platten mit einem Kunststoff-Mörtel mit zusätzlicher Armierung untereinander verbunden. Damit wird die Aufgabe gelöst, Platten mit beliebiger Breite und Dicke zu produzieren, die eine hohe Querstabilität und Verwindungssteifigkeit besitzen.

In der US 3,070,475 wird ein kontinuierlicher Prozess zur Herstellung von leichten und steifen Sandwichplatten aus einzelnen papierbeschichteten Polystyrollagen gleicher Breite offenbart, wobei die einzelnen papierbeschichteten Polystyrollagen nach einer Drehung um 90° mit einem Klebstoff miteinander verbunden werden. Die sich über die gesamte Länge der Polystyrollagen der Sandwichplatte erstreckenden Papierlagen fungieren dabei als Armierung für die einzelnen Polystyrollagen. Die armierten und verklebten Polystyrollagen bilden die beschichtete Sandwichplatte. Auf die Ober- und Unterseite der papierarmierten Mittelschicht ist dabei eine Deckschicht aufgebracht, die ebenfalls aus einer Papierlage besteht.

Nachteilig bei dem bekannten Verfahren ist, dass die Verfahrensschritte relativ aufwändig sind und dass das Ausgangsmaterial und der Klebeverband sehr genau an die spätere Verwendung angepasst werden müssen.

Es stellt sich daher die Aufgabe, ein Verfahren zur Herstellung von beschichteten Dämmstoffplatten aus extrudiertem Polystyrol in Sandwichbauweise anzugeben, mit dem sich beschichtete Dämmstoffplatten auf besonders einfache und kostengünstige Weise auf kleinen und ebenfalls kostengünstigen Extrudern herstellen lassen und bei dem die Verfahrensschritte und Verfahrensvoraussetzungen vereinfacht sind und insbesondere ein Ausgangsmaterial verwendet wird, welches auch auf kleinen Extrudern mit geringeren Drücken hergestellt werden kann. Es handelt sich hierbei um Extruder, bei denen der Mundstück-Querschnitt auf etwa 750 cm$^2$, z.B. auf 12 x 60 cm$^2$, beschränkt ist. Derartige Extruder sind weiter verbreitet und wesentlich kostengünstiger zu betreiben als Extruder mit sehr viel höheren Drücken, wie sie für Mundstücke erforderlich sind, die das oben genannte Maß wesentlich übersteigen. Das angestrebte Verfahren soll weiterhin die Möglichkeit geben, Kunststoff-Schaumplatten mit größeren Abmessungen als die von derartigen Extrudern vorgegebenen Dicken und Breiten zu fertigen.

Die Erfindung wird durch ein Verfahren gelöst, das folgende Verfahrensschritte aufweist:

a) Extrudieren eines Schaumstoffstranges mit einem im wesentlichen rechteckigen Extrusionsmundstück der Abmessung h x b (h = Höhe; b = Breite);

b) Ablängen des Schaumstoffstranges in Längenabschnitte der Länge 1, Zurichten und Ausgasenlassen;

c) Zusammenkleben von wenigstens n = 2 der erhaltenen Längenabschnitte an den Hauptseiten als Klebeflächen zu quaderförmigen Blöcken der Abmessung

    Höhe n x h
    Breite b
    Länge 1;

d) planes Schneiden der Blöcke quer zu den Klebeflächen in Abständen $s_1$, $s_1 + s_2$, ..., $s_1 + s_2 + ... + s_m$ zu der Seite mit der Höhe n x h zu Blockplatten;

e) Verbinden der Blockplatten auf wenigstens einer der quer zu der bzw. den Klebeschichten liegenden Seite mit einer Abdeckung.

Die vorgenannten Abstände $s_1$, $s_2$, .., $s_m$ können untereinander gleich oder ungleich sein.

Als Produkt ergibt sich aus dem genannten Verfahren ein Blockplatten-Material, das in seiner Dicke wesentlich größer sein kann als das aus dem Extruder gewonnene Material mit der Abmessung h x b. Daneben besitzt dieses Material Verwindungssteifigkeit. Im Aussehen ähnelt es den bekannten Baustoffplatten, die unter dem Markennamen "wedi"-Platten bekannt sind, wenn der gleiche Mörtel als Abdeckung verwendet wird wie bei den bekannten Platten.

Die verwendete Abdeckung kann beispielsweise aus einer Metallplatte, einer Kunststoffplatte oder -folie, insbesondere aber aus einer Schaumstoffplatte, gebildet werden.

Vorzugsweise sollte die Abdeckung aus einer ausgehärteten Mörtelschicht, zum Beispiel aus Kunststoffmörtel, gebildet werden. Auch Kombinationen von Mörtel und anderen Materialien sind möglich, so beispielsweise eine Abdeckung aus einer Metallplatte, einer Kunststoffplatte oder - folie, insbesondere aus einer Schaumstoffplatte, die auf ihrer Außen- und/oder Innenseite eine Mörtelschicht trägt.

Die Mörtelschicht kann auch mit einer Bewehrung versehen werden.

Bei dem zur Verwendung gelangenden Kunststoffmörtel handelt es sich vorzugsweise um bekannte kunstharzvergütete, hydraulisch abbindende Klebemörtel, die nach dem Aushärten weitgehend wasserfest sowie witterungs-, alterungs- und frostbeständig sind. Die einzusetzenden Mörtel sind an sich bekannt und entsprechen denen der bei bekannten Hartschaumplatten, Produktname wedi-Platten, verwendeten Art.

Das extrudierte Polystyrol, auch bezeichnet als XPS, ist ebenfalls normiert und dem Fachmann mit dieser Bezeichnung unter verschiedenen Härtegraden bekannt. Als Ausgangsmaterial werden blähfähige Granulate verwendet, die einen festen Verband ergeben.

Um zu einem Ausgleich eventueller Verformungen zu kommen, wird vorgeschlagen, dass vor dem oben genannten Schritt c) jeweils die benachbarten Platten in Schnittrichtung um 180° zueinander gewendet werden.

Durch das relativ kleinformatige Ausgangsmaterial braucht nicht lange auf das Ausgasen gewartet zu werden. Da heute anstelle von FCKW Blähgasen oft brennbare Gase, nämlich Kohlenwasserstoffe, verwendet werden, sollte das Ausgasenlassen im oben genannten Schritt b) bis zur praktisch völligen Verflüchtigung aller brennbaren Gase aus den Längenabschnitten erfolgen.

Ein weiterer Vorteil ist, dass verschiedene Klebstoffarten verwendet werden können, d.h. ohne Einbuße an Ausgasvermögen auch solche, die diffusionsgeschlossene Klebeflächen ergeben und zumeist bessere Klebeigenschaften haben also solche Klebstoffe, die nach dem Verkleben diffusionsoffen sind.

Die Erfindung umfasst auch die nach dem Verfahren hergestellten Produkte. Herauszuheben ist hierbei eine abgedeckte Blockplatte, die mit zwei bewehrten Mörtelschichten als Abdeckungen versehen ist.

Die bereits genannte Bewehrung kann aus Glasfasergewebe oder Glasfaservlies bestehen.

Insbesondere im Fahrzeug- oder Maschinenbau können auch Blockplatten verwendet werden, die mit wenigstens einer Abdeckung, die ein Metallblech umfasst, versehen sind.

Ein Ausführungsbeispiel der Erfindung wird anhand der Zeichnung dargestellt. Die Figuren der Zeichnung zeigen im einzelnen:

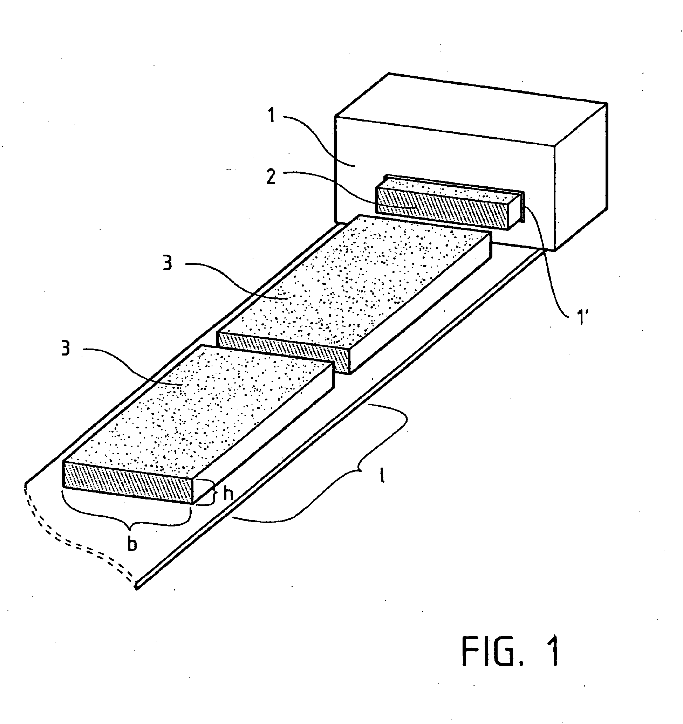

Fig. 1    schematisch einen Extrudier- und Ablängvorgang;

Fig. 2    nebeneinander gestellte und verklebte XPS-Platten;

Fig. 3    Schnittformen;

Fig. 4    nach dem Verfahren hergestellte Kunststoffschaumplatten.

Das Verfahren gemäß Erfindung geht aus von extrudierten Polytyrolplatten, sogenannten XPS-Platten. Es handelt sich hierbei um extrusionsgeschäumte Kunststoffplatten, die kein Wasser aufnehmen oder nur in geringem Maße wasseraufnahmefähig sind. Das Aufschäumen geschieht unter Druck und mit Hilfe von Schäum- oder Treibgasen, darunter Alkoholen, insbesondere Ethanol. In einem Extruder 1 wird durch ein Extrusionsmundstück 1', das eine Querschnittsfläche von 720 cm$^2$ besitzt und dessen Abmessungen 12 cm Höhe und 60 cm Breite sind, ein Schaumstoffstrang 2 erzeugt. Der Schaumstoffstrang hat wechselnde Abmessungen, d. h. seine Abmessungen sind nicht genau auf 12 x 60 cm begrenzt. Der Schaumstoffstrang 2 wird abgelängt in Längenabschnitte 3 der Länge 1, die mit Hilfe von Messern oder Schneiddrähten auf die genauen Abmessungen zugerichtet werden und danach in ein Lager überführt werden, in dem die Längenabschnitte ausgasen bis zur völligen Entfernung von feuergefährlichen Treibgasen.

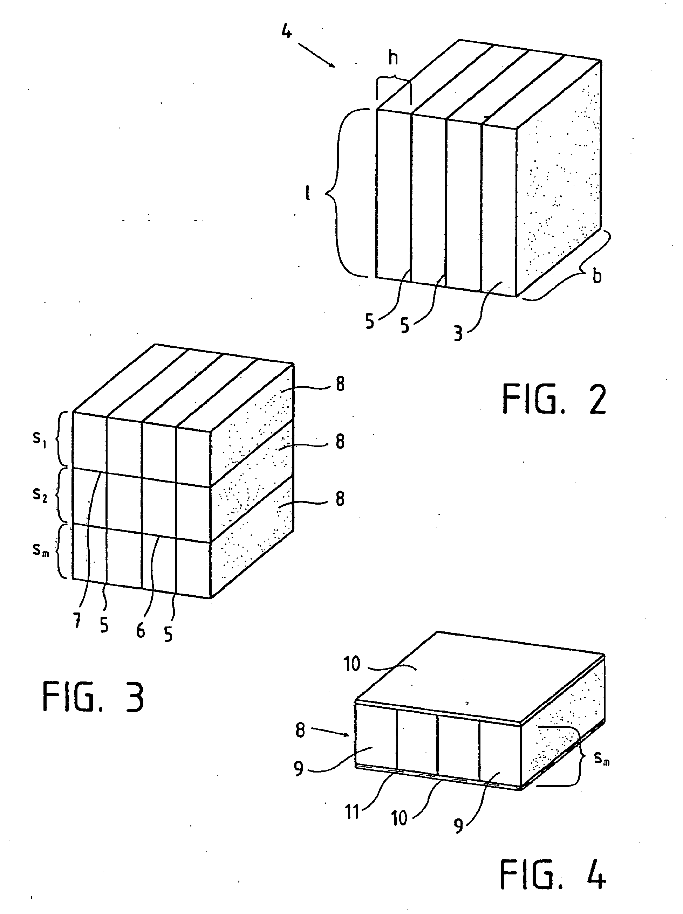

Die Längenabschnitte 3 werden zu mehreren (hier n = 4 Stück) jeweils auf der Hauptseite im Bereich von Klebeschichten 5 zusammengeklebt, wobei sich quaderförmige Blöcke 4 in der Abmessung Höhe n x h, Breite b und Länge 1 ergeben, die in Figur 2 dargestellt sind. Die Blöcke 4 werden zusammengeklebt, wobei jeweils vor dem Zusammenkleben die benachbarten Platten in Schnittrichtung um 180° zueinander gewendet werden. Hierdurch werden unerwünschte Wölbungen und Ungleichmäßigkeiten ausgeglichen.

Die zusammengesetzten Blöcke 4 werden gemäß Figur 3 plan geschnitten, und zwar quer zu den Klebeflächen 5 mit Schnitten 6, 7. Hierbei ergeben sich beispielsweise über die Höhe der Blöcke 4 drei Blockplatten 8 mit der Höhe $S_1$, $S_2$, $S_m$. Die Blockplatten 8, die aus untereinander verbundenen Blocksegmenten 9 bestehen, werden quer zu den Klebeschichten 5 mit einer Abdeckung 10 versehen. Die Abdeckung kann beispielsweise aus einer ausgehärteten Mörtelschicht gebildet sein. Die Mörtelschicht kann auch noch mit einer Bewehrung 11 aus Glasfasermatter oder dergleichen versehen sein. Die Abdeckung 10 kann auch aus einer Metallplatte oder einer Kunststoffplatte, einer Kunststofffolie oder auch aus einer Schaumstoffplatte bestehen.

Der Vorteil ist, dass aufgrund der speziellen Zusammensetz- und Schnitttechnik sich Blockplatten 8 ergeben, deren Dicke größer ist als die der Schaumstoffplatten 3, die sich aufgrund der relativ kleinen Abmessungen des Extruders und seines Mundstücks 1' bilden lassen.

Dadurch, dass die Platten sowohl vor dem Zusammenkleben als auch noch nach dem Zusammenkleben an ihren freien Schnittflächen ausgasen können, können Klebstoffe verwendet werden, die eine diffusionsgeschlossene Klebefläche ergeben, was an sich für das Verkleben der Schaumstoffplatten nicht erwünscht ist, da ein Ausgasen durch solche Klebeflächen verhindert wird.

Vorzugsweise sind die Platten 3 immer gleich dick. Es ist aber auch möglich, sie zur Erzielung bestimmter Abmessungen noch einmal zu spalten oder gar zu dritteln, so dass die Abstände der Klebeflächen nicht immer exakt gleich sind.

Die Bewehrung 11 besteht vorzugsweise aus Glasfasergewebe oder Glasfaservlies. Hier können jedoch auch andere Materialien verwendet werden, wie dies aus der Technologie der Schaumstoffplatten an sich bekannt ist.

Durch das Zusammenstellen von Plattenabschnitten zu Blockplatten 8 lassen sich auch fehlerhafte Homogenitäten bei der Extrusion sehr gut ausgleichen. Dabei ist von Vorteil, dass die Homogenität bei relativ kleinen Platten von Natur aus größer ist als bei dicken extrudierten Platten. Die inhomogene Struktur lässt sich jedoch mit dem Verfahren praktisch derart ausgleichen, dass sie vernachlässigbar ist.

Ein weiterer Vorteil ist, dass sehr rasch gewechselt werden kann, wenn andere Abmessungen der endgültigen Blockplatte mit Abdeckung erwünscht sind.

Die Klebeflächen 5 erhöhen zudem die innere Struktur und Verwindungssteifigkeit der Platten.

Zwar ist das Herstellungsverfahren zeitlich länger als das bei der Herstellung von extrudierten Blöcken, die von vornherein eine große Abmessung haben. Die bei diesen Blöcken sehr viel größeren Werkzeugkosten und Ausschussverfahren wegen ungleichmäßiger Stoffbildung gleichen diese Nachteile jedoch aus.

**Patentansprüche**

1. Verfahren zur Herstellung von Kunststoffschaumplatten aus Polystyrol-Extrusionsschaummaterial, mit folgenden Verfahrensschritten:

   a) Extrudieren eines Schaumstoffstranges mit einem im wesentlichen rechteckigen Extrusionsmundstück der Abmessung h x b (h = Höhe; b = Breite);
   b) Ablängen des Schaumstoffstranges in Längenabschnitte (3) der Länge 1, Zurichten und Ausgasenlassen;
   c) Zusammenkleben von wenigstens n = 2 der erhaltenen Längenabschnitte an den Hauptseiten als Klebeflächen zu quaderförmigen Blöcken (4) der Abmessung

   Höhe n x h
   Breite b
   Länge l;

   d) planes Schneiden der Blöcke (4) quer zu den Klebeflächen in Abständen $s_1$, $s_1 + s_2$, $s_1 + s_2 + ... + s_m$ zu der Seite mit der Höhe n x h zu Blockplatten (8) der Abmessung

$$s_m \; x \; (n \; x \; h) x \; l;$$

   e) Verbinden der Blockplatten (8) auf wenigstens einer der quer zu der bzw. den Klebeschichten liegenden Seite mit einer Abdeckung (11).

2. Verfahren nach Anspruch 1, **dadurch gekennzeichnet, dass** die Abdeckung (11) aus einer Metallplatte, einer Kunststoffplatte oder -folie, insbesondere aus einer Schaumstoffplatte, gebildet wird.

3. Verfahren nach Anspruch 1, **dadurch gekennzeichnet, dass** die Abdeckung (11) aus einer ausgehärteten Mörtelschicht gebildet wird.

4. Verfahren nach Anspruch 1, **dadurch gekennzeichnet, dass** die Abdeckung (11) aus einer Metallplatte, einer Kunststoffplatte oder -folie, insbesondere aus einer Schaumstoffplatte, gebildet ist, die auf ihrer Außen- und/oder Innenseite eine Mörtelschicht trägt.

5. Verfahren nach Anspruch 3 oder 4, **dadurch gekennzeichnet, dass** die Mörtelschicht mit einer Bewehrung versehen ist.

6. Verfahren nach Anspruch 1, **dadurch gekennzeichnet, dass** vor Schritt c) jeweils die benachbarten Platten in Schnittrichtung um 180° zueinander gewendet werden.

7. Verfahren nach Anspruch 1, **dadurch gekennzeichnet, dass** das Ausgasenlassen in Schritt b bis zur praktisch völligen Verflüchtigung aller brennbaren Gase aus den Längenabschnitten erfolgt.

8. Verfahren nach Anspruch 1, **dadurch gekennzeichnet, dass** der zum Kleben gemäß Schritt c) verwendet Kleber diffusionsgeschlossene Klebeflächen ergibt.

9. Verfahren nach einem der vorhergehenden Ansprüche, **dadurch gekennzeichnet, dass** die Abstände $s_1$, $s_2$, ..., $s_m$ untereinander gleich sind.

10. Abgedeckte Blockplatte, hergestellt nach einem der Ansprüche 1 bis 9 umfassend wenigstens

    - n = 2 Längenabschnitte (3) eines extrudierten, zugerichteten und ausgegasten Schaumstoffstranges mit einer Höhe h, die an den Hauptseiten als Klebeflächen zu quaderförmigen Blöcken (4) der Abmessung Höhe n x h, Breite b und Länge 1 zusammengeklebt sind
    - und durch planes Schneiden der Blöcke (4) quer zu den Klebeflächen in Abständen $s_1$, $s_1 + s_2$, $s_1 + s_2 + ... + s_m$ zu der Seite mit der Höhe n x h der Abmessung $s_m$ x (n x h)x 1 entstandene Blockplatten (8),
    - wobei die Blockplatten (8) auf wenigstens einer quer zu der bzw. den Klebschichten liegenden Seite mit einer Abdeckung (11) verbunden sind.

11. Abgedeckte Blockplatte nach Anspruch 10, **dadurch gekennzeichnet, dass** als Abdeckungen (11) zwei bewehrte Mörtelschichten vorgesehen sind.

**12.** Abgedeckte Blockplatte nach Anspruch 11, **dadurch gekennzeichnet, dass** die Bewehrung der Abdeckungen (11) aus Glasfasergewebe oder Glasfaservlies besteht.

**13.** Abgedeckte Blockplatte nach Anspruch 10, **dadurch gekennzeichnet, dass** sie wenigstens eine Abdeckung (11) ausweist, die ein Metallblech umfasst.

**Claims**

**1.** Method for producing synthetic material foam plates consisting of polystyrene-extruded foam material, having the following method steps:

a) extruding a foam strand by means of a substantially rectangular extrusion die of dimensions h x b (h = height; b = breadth);
b) cutting the foam strand into longitudinal portions (3) of length 1, trimming and outgassing;
c) adhering at least n = 2 of the obtained longitudinal portions together on the main sides as adhesive surfaces to form cuboid blocks (4) of dimensions

height n x h
breadth b
length l;

d) cutting, in a planar manner, the blocks (4) transversely with respect to the adhesive surfaces at distances $s_1$, $s_1 + s_2$, $s_1 + s_2 + ... + s_m$ to the side with the height n x h to form block plates (8) of dimensions

$$s_m \; x \; (n \; x \; h) \; x \; l;$$

e) connecting the block plates (8) on at least one of the sides located transverse to the adhesive layer(s) to a covering (11).

**2.** Method as claimed in Claim 1, **characterised in that** the covering (11) is formed from a metal plate, a synthetic material plate or sheet, in particular from a foam plate.

**3.** Method as claimed in Claim 1, **characterised in that** the covering (11) is formed from a hardened mortar layer.

**4.** Method as claimed in Claim 1, **characterised in that** the covering (11) is formed from a metal plate, a synthetic material plate or sheet, in particular from a foam plate, which supports a mortar layer on its outer and/or inner side.

**5.** Method as claimed in Claim 3 or 4, **characterised in that** the mortar layer is provided with a reinforcement.

**6.** Method as claimed in Claim 1, **characterised in that** prior to step c), the adjacent plates are turned with respect to each other by 180° in the cutting direction in each case.

**7.** Method as claimed in Claim 1, **characterised in that** the outgassing in step b is effected until the practically complete volatilisation of all combustible gasses from the longitudinal portions.

**8.** Method as claimed in Claim 1, **characterised in that** the adhesive used for the purposes of adhesion in accordance with step c) produces diffusion-closed adhesive surfaces.

**9.** Method as claimed in any one of the preceding Claims, **characterised in that** the distances $s_1$, $s_2$, ..., $s_m$ are identical to each other.

**10.** Covered block plate produced in accordance with any one of Claims 1 to 9, comprising at least

- n = 2 longitudinal portions (3) of an extruded, trimmed and outgassed foam strand having a height h, which are adhered together on the main sides as adhesive surfaces to form cuboid blocks (4) of dimensions height n x h, breadth b and length l
- and block plates (8) of dimensions $s_m$ x (n x h) x l created by cutting, in a planar manner, the blocks (4) transversely with respect to the adhesive surfaces at distances $s_1$, $s_1 + s_2$, $s_1 + s_2$ + ... + $s_m$ to the side with the height n x h,
- wherein the block plates (8) are connected on at least one side located transverse to the adhesive layer(s) to a covering (11).

**11.** Covered block plate as claimed in Claim 10, **characterised in that** two reinforced mortar layers are provided as coverings (11).

**12.** Covered block plate as claimed in Claim 11, **characterised in that** the reinforcement of the coverings (11) consists of fibreglass fabric or a fibreglass mat.

**13.** Covered block plate as claimed in Claim 10, **characterised in that** it comprises at least one covering (11) which includes a metal sheet.

## Revendications

1. Procédé de fabrication de panneaux de mousse synthétique à partir de mousse de polystyrène extrudée comportant les opérations suivantes:

   a) Extrusion d'un boudin de mousse à l'aide d'un orifice de filière sensiblement rectangulaire et de dimensions h x b (h = hauteur; b = largeur);
   b) Découpage à longueur du boudin de mousse en tronçons (3) de longueur l; dressage et dégazage;
   c) Assemblage par collage de n = 2 au moins des tronçons réalisés, les faces principales de ces derniers servant de faces de collage, pour constituer des blocs (4) en forme de parallélépipède aux dimensions

   Hauteur n x h
   Largeur b
   Longueur l;

   d) Découpage plat des blocs (4) perpendiculairement aux faces de collage, à des distances de $s_1$, $s_1 + s_2$, $s_1 + s_2 + ... + s_m$ par rapport au côté dont la hauteur est égale à n x h, afin de former des panneaux de blocs (8) aux dimensions

   $$s_m \times (n \times h) \times 1;$$

   e) Liaison de chaque panneau de blocs (8) par un revêtement (11) sur au moins un des côtés perpendiculaires à la face ou aux faces de collage.

2. Procédé selon la revendication 1, **caractérisé en ce que** le revêtement (11) est constitué d'une plaque de métal ou d'une plaque ou feuille de matière synthétique, en particulier d'une plaque de mousse.

3. Procédé selon la revendication 1, **caractérisé en ce que** le revêtement (11) est constitué d'une couche de mortier durci.

4. Procédé selon la revendication 1, **caractérisé en ce que** le revêtement (11) est constitué d'une plaque de métal ou d'une plaque ou feuille de matière synthétique, en particulier d'une plaque de mousse, ladite plaque étant revêtue sur sa face externe et/ou interne d'une couche de mortier.

5. Procédé selon la revendication 3 ou 4, **caractérisé en ce que** la couche de mortier est armée.

6. Procédé selon la revendication 1, **caractérisé en ce que**, préalablement à l'opération c), les tronçons adjacents sont tournés de 180° l'un par rapport à l'autre, dans le sens de la coupe.

7. Procédé selon la revendication 1, **caractérisé en ce que** le dégazage au cours de l'opération b) dure jusqu'à ce que tous les gaz inflammables contenus dans les tronçons se soient pour ainsi dire totalement volatilisés.

8. Procédé selon la revendication 1, **caractérisé en ce que** la colle employée dans l'opération c) a pour effet de produire des faces scellées par diffusion.

9. Procédé selon l'une quelconque des revendications précédentes, **caractérisé en ce que** les distances $s_1$, $s_2$, ... $s_m$ sont identiques l'une par rapport à l'autre.

10. Panneau de blocs recouvert, fabriqué selon l'une quelconque des revendications 1 à 9, comprenant au moins

    - n = 2 tronçons (3) d'un boudin de mousse extrudé, dressé et dégazé de hauteur h, lesdits tronçons étant assemblés par collage au niveau de leurs faces principales pour former des blocs (4) en forme de parallélépipède de hauteur n x h, de largeur b et de longueur l
    - et des panneaux de blocs (8) aux dimensions $s_m \times (n \times h) \times 1$, réalisés par découpage plat des blocs (4) perpendiculairement aux faces de collage, à des distances de $s_1$, $s_1 + s_2$, $s_1 + s_2 + ... + s_m$ par rapport au côté dont la hauteur est égale à n x h,

    lesdits panneaux de blocs (8) étant liés par un revêtement (11) sur au moins un des côtés perpendiculaires à la face ou aux faces de collage.

11. Panneau de blocs recouvert selon la revendication 10, **caractérisé en ce qu'**il est prévu comme revêtements (11) deux couches de mortier armé.

12. Panneau de blocs recouvert selon la revendication 11, **caractérisé en ce que** l'armature des revêtements (11) est composé d'un tissu de fibres de verre ou d'un non-tissé de fibres de verre.

13. Panneau de blocs recouvert selon la revendication 10, **caractérisé en ce que** ledit panneau est pourvu d'au moins un revêtement (11) comportant une tôle métallique.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0466163 A
- US 3070475 A